# EUROPEAN PATENT APPLICATION

(11) **EP 2 131 228 A1**
(43) Date of publication of application: **09.12.2009**
(21) Application number: 08736703.3
(22) Date of filing: 22.02.2008
(51) Int. Cl.: G02B 27/22, H04N 13/00

(54) **STRUCTURAL STEREOSCOPIC VISUALISATION LAYOUT FOR USE IN VIRTUAL REALITY ENVIRONMENTS**

(30) Priority: 23.02.2007 ES 200700410 U
(71) Applicant: Frontera Azul Systems S.L., 28003 Madrid (ES)
(72) Inventor: ALEX JIMENEZ, Pablo, E-28003 Madrid (ES)
(86) International application number: PCT/ES2008/000101
(87) International publication number: WO 2008/102042

(57) **Abstract**

The subject of the invention is a stereoscopic visualisation structure, also known as Cave, for use in virtual reality environments, **characterised in that** it can be assembled in a very small horizontal space compared with currently available products. The special layout of the mirrors and projectors integrated into the structure makes it possible to advantageously install the structure in smaller horizontal spaces than those which are normally necessary for Caves and which have been used up until now, it thus being possible to use the structure in a larger number of environments.

## Description

### OBJECT OF THE INVENTION

The invention, as it is expressed by the statement of the present specification, refers to a structural stereoscopic visualisation layout for use in virtual reality environments, which contributes to the function that goes several advantages and innovative features, described in detail below, which represent a remarkable improvement to what is already known in this field.

More specifically, the object of the invention consists in the realization of a stereoscopic visualisation structure, also known as "Cave", for being used in virtual reality environments, which has a distinct low horizontal space requirements for assembling comparatively with current products. Through a special arrangement of the mirrors and projectors built into the structure, advantageously allows horizontal installation in smaller spaces than normally required for the "Caves" known so far, thus allowing its use in a wider range of environments.

### BACKGROUND TO THE INVENTION

At present and as a reference to prior art, it should be mentioned that are known three-dimensional visualization systems based on stereoscopic projection screens to the front, or on rear projection, forming a cubic structure, receiving the video images from the outside of the cube, by channeling light rays from one projector per screen (stereoscopic image based on alternating images and alternating stereoscopic glasses), or two per screen (based on double stereoscopic image simultaneously, with different polarization of light for each one, because of the filters interposed in the light beam, and polarized glasses), through strategically placed mirrors along of the room.

Thus, the focal lengths required to achieve adequate image size for the projection on the screens, are divided into sections oblique, minimizing the room space needed for installation and operation of the cave.

The distribution of the mirrors for the vertical screens, is performed orthogonal to the ground plane and the same height.

There are also caves in which the projectors focus the light directly on the screens, without mediation of mirrors, requiring large horizontal space for installation.

It should be noted, however, that the petitioner was not aware of any structural arrangement applicable on stereoscopic virtual reality environments, which presented a technical characteristics, structural and configuration, similar to those presented here, and whose main objective is to solve the problem of need for large spaces that have the systems currently known for the same purpose.

### DESCRIPTION OF THE INVENTION

Thus the structural stereoscopic visualisation layout for use in virtual reality environments that is advocated by the present invention, represent an evident novelty within its scope, since according to its realization is achieved a different way of build a cave, by integrating itself, of the projectors and mirrors so that it achieves a significant reduction in the horizontal space required for installation and operation of the structural arrangement, channeling the light rays from the projectors, in a vertically rather than horizontally, before slamming into the walls of the cave.

In the structural arrangement of the invention, the screens at their corners are completely air side, "on the air". Its aim is to avoid the projection of shadows caused by any fastener after them. To get a correct binding at the corners, will join the edges of the screens to each other by any technique that avoids the production of shadows (stitched, interlocked, points of adhesive, etc.).

It is recommended mirrors made of superficial projection, avoiding small aberrations in the reflected image.

Projectors (one or two per screen, depending on the projection), are arranged in small trays which can be moved along the crossbars of the cave, and tightened by nuts on them once achieved the proper focal distance. These trays are adjustable in its inclination with respect to the crossbars.

The mirrors can rotate around the shafts, secured at their ends by crossbars of the cave. Steel cables secured to the crossbars, varying in length through a system of adjustable length pin, attach the ends of the mirrors while maintaining its inclination. By adjusting the length of such cables will ensure a perfect fit of channeling light rays of the projectors.

The invention further provides innovatively, guardrail that will protect both the various elements that make arrangements or cave, and its users, before any rubbing and / or hitting with the structure.

The new structural stereoscopic visualisation layout for use in virtual reality environments is, thus, an innovative structure, with structural characteristics for that purpose, hitherto unknown, reasons that linked to its practical utility, endow a sufficient basis for the privilege requesting exclusivity.

### DESCRIPTION OF DRAWINGS

To complement the description being made and in order to help better understand the features of the invention, accompanies this specification as an integral part thereof, a set of drawings, in which with illustrative and not limiting character, is represented as follows:

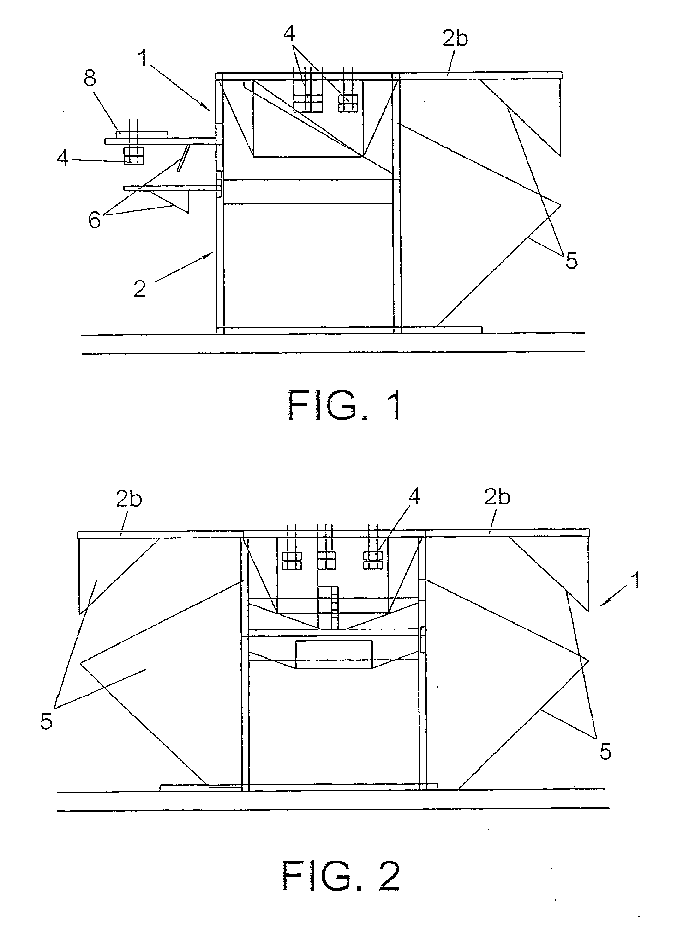

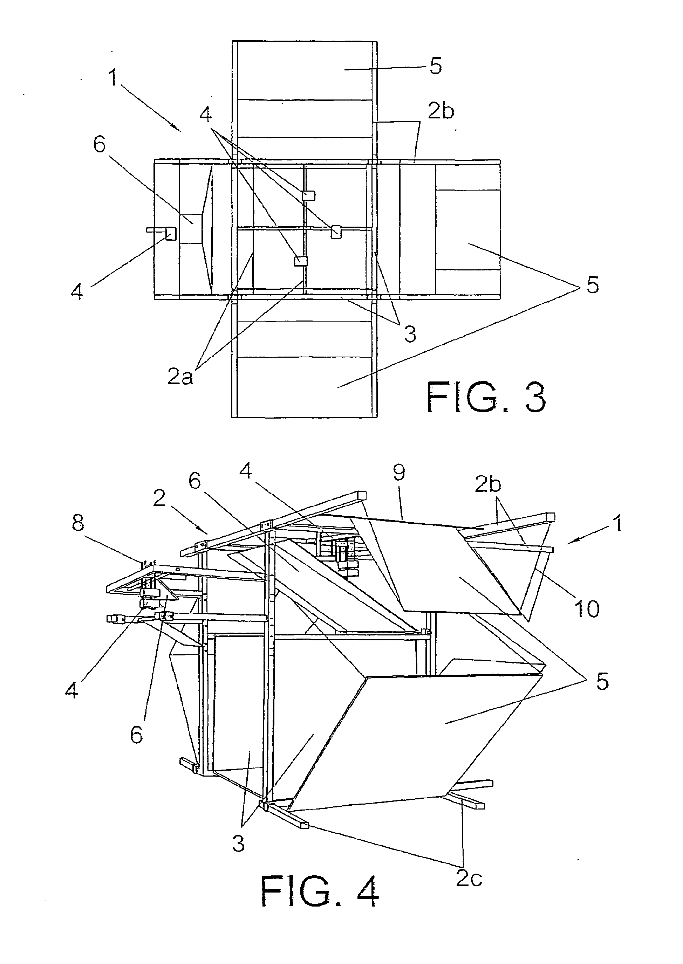

Figures No. 1, 2, 3 and 4 .- show respective views (front, top and side perspectives) of one embodiment of the new structural stereoscopic visualisation layout for use in virtual reality environments, according to the invention, in which we appreciate the main parts and elements which includes, as well as the configuration and arrangement thereof.

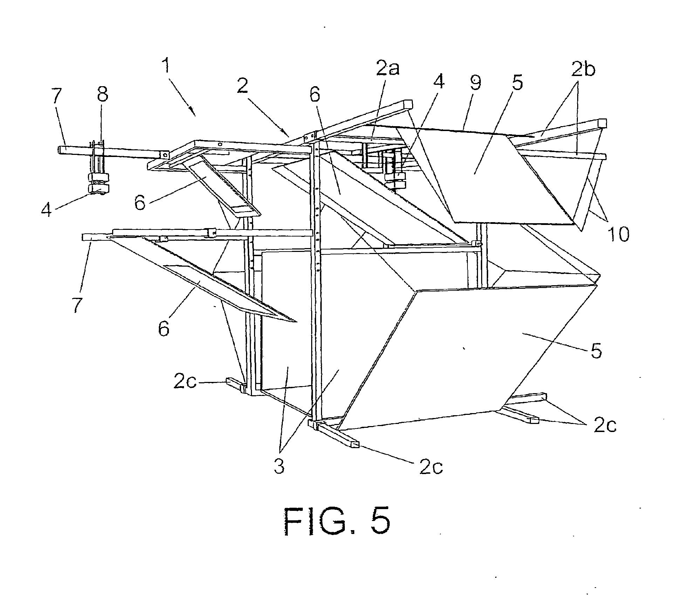

Figure 5 .- Shows a perspective view of the example shown in previous figures, in which new pieces for support have been incorporated in order to transform the projection of the ground in projection on the ceiling, extending the focal length of the projectors.

### PREFERRED EMBODIMENT OF THE INVENTION

In view of the aforementioned figures, and according to the numbering adopted, we can see in them a preferred embodiment of the structural stereoscopic visualisation layout for use in virtual reality environments, which includes parts and items specified and described in detail hereunder.

Thus, as shown in Figures 1 to 4, the structural arrangement (1) of the invention, which will be called cave, comprises a structure (2), formed from the union of several crossbars or tubes, preferably metal, forming an area, approximately prismatic, showing crossbars (2a), crossed at the top, and top crossbars(2b) and lower crossbars (2c), which protrude from the same side and subsequently, at which are fixed through conventional methods, three lateral screens (3), arranged vertically in adjacent sides, four projectors (4), which can be single or double, and six mirrors (5) for lateral projection, also disposes of three additional mirrors (6), set obliquely on the top, and upper front of the structure (2), whose incorporation and special provision, allows stereoscopic projection achieved on the floor of the cave (1), and in which, as seen in Figure 5, by adding optional parts support or extension (7), assembled in the front and on top of the structure (2), manages for turning the floor projection, on ceiling projection of the cave (1), because these pieces can lengthen the focal length of the projectors (4) and using additional mirrors (6) for this purpose.

Thus, the screens (3) are in the lateral corners of the structure (2) completely air side, linked together at the corners, by any technique that avoids the production of shadows (stitched, interlocked, points of adhesive, etc.).

It is noteworthy that the mirrors (5) and (6) are preferably surface projection, thus preventing small aberrations in the reflected image.

Moreover, the projectors (4) (one or two per screen, depending on the kind of projection), are arranged on small trays (8) which present means that allow its movement along the crossbars (2a) of the structure (2) and along the central crossbar of the top frontal structure or its respective extension, may tighten by nuts on them once achieved the proper focal distance. These trays (8) are likewise adjustable in its inclination with respect to their support crossbars.

In turn, the mirrors (5) and (6) have the means to rotate on axes (9) fastened at its ends to the crossbars (2b) (2c) and the lateral crossbars of the front structure and its corresponding extension (7). Steel cables (10) secured to the crossbars, varying in length through a system of adjustable length pin, attach the ends of the mirrors (5) and (6), maintaining its inclination. By adjusting the length of such cables will ensure a perfect fit of channeling of the rays of light from the projectors (4).

Finally, a guardrail (not shown) surrounding the outer perimeter of the structure, will protect both the cave (1) and its users, from scratches and knocks to the structure.

Sufficiently described the nature of the present invention, as well as how to implement it, is not considered necessary to extend his explanation for any expert in the field can understand its scope and benefits from it result, stating that, in its essence, can be put into practice in other embodiments that differ in the detail given here in the example, and which also applies the sought protection, unless it is altered, change or modify its fundamental principle.

## Claims

1. STRUCTURAL STEREOSCOPIC VISUALISATION LAYOUT FOR USE IN VIRTUAL REALITY ENVIRONMENTS of kind destined for rear-projection, stereoscopic three-dimensional representation that, forming a cubic structure, receive the image projection from the outside of the cube, through channeling of the light rays from one projector per screen (stereoscopic vision based on alternating images and alternating glasses), or two projectors per screen (stereoscopic vision based on double simultaneous images with different light polarization each one, based on filters interposed in the ray way, and polarized glasses), through mirrors placed strategically along the room, **characterized in that** comprises a structure (2), formed from the union of several crossbars or tubes, preferable metal, forming an area, approximately prismatic, showing crossbars (2a), crossed at the top, and top crossbars (2b) and lower crossbars (2c), which protrude from the same side and subsequently, at which are fixed through conventional methods, three lateral screens (3), arranged vertically in adjacent sides, four projectors (4), which can be single or double, and six mirrors (5) for lateral projection, also disposes of three additional mirrors (6), set obliquely on the top, and upper front of the structure (2), allowing stereoscopic projection achieved on the floor of the cave (1).

2. STRUCTURAL STEREOSCOPIC VISUALISATION LAYOUT FOR USE IN VIRTUAL REALITY ENVIRONMENTS according to the 1st claim, **characterized in that** optionally, the front on top of the structure (2) includes support or extension parts (7), that allow lengthen the focal length of the projectors (4) and using additional mirrors (6), for turning the floor projection, on ceiling projection of the cave (1).

3. STRUCTURAL STEREOSCOPIC VISUALISATION LAYOUT FOR USE IN VIRTUAL REALITY ENVIRONMENTS according to the 1st and 2nd claims, **characterized in that** the projectors (4) (one or two per screen, depending on the kind of projection), are arranged on small trays (8) which present means that allow its movement along the crossbars (2a) of the structure (2) and along the central crossbar of the top frontal structure or its respective extension (7), and can be tighten by nuts on them once achieved the proper focal distance, being these trays (8) adjustable in its inclination with respect to their support crossbars.

4. STRUCTURAL STEREOSCOPIC VISUALISATION LAYOUT FOR USE IN VIRTUAL REALITY ENVIRONMENTS according to the 1st, 2nd and 3rd claims, **characterized in that** the mirrors (5) and (6), preferable surface projection, have the means to rotate on axes (9) fastened at its ends to the crossbars (2b) (2c) and the lateral crossbars of the front structure and its corresponding extension (7), in where steel cables (10) secured to the crossbars (2b), varying in length through a system of adjustable length pin, attach the ends of such mirrors (5) and (6), maintaining its inclination.
